# EUROPEAN PATENT APPLICATION

(11) **EP 2 302 568 A2**
(43) Date of publication of application: **30.03.2011**
(21) Application number: 10009647.8
(22) Date of filing: 15.09.2010
(51) Int. Cl.: G06K 19/077, H01Q 1/24, H01Q 1/22, H01P 1/04, H04B 1/38

(54) **Antenna device**

(30) Priority: 16.09.2009 TW 98217051
(71) Applicant: Phytrex Technology Corporation, Xinyi Dist Taipei 110 (TW)
(72) Inventor: Hsiao, Feng-Chi, Taipei 110 (TW); Yang, Kun-Shan, Taipei 110 (TW); Lin, Tung-Fu, Taipei 110 (TW); Cheng, Chin-Fen, Taipei 110 (TW); Lee, Chih-Wei, Taipei 110 (TW)
(74) Representative: UEXKÜLL & STOLBERG

(57) **Abstract**

The present invention provides an antenna device (300) comprising: a contact substrate (301) with a plurality of electrical contacts (305), an antenna substrate (307), and a connecting member (311) connected between said contact substrate (301) and said antenna substrate (307). Said connecting member (311) is flexible and foldable and is provided with at least one corner portion (325). Said corner portion (325) defines at least one horizontal section (327) and at least one vertical section (329) to render the antenna device better adaptability. For example the antenna device may be used in a mobile phone to add smart card functionality. The contact substrate (301 ) may be attached to a SIM card and the antenna substrate (307) may be placed on an outside side of the mobile phone battery. The connecting member (311) flexibly interconnects the contact substrate (301) and the antenna substrate (307) regardless of their relative positions.

## Description

### BACKGROUND OF THE INVENTION

### FIELD OF THE INVENTION

The present invention relates to an antenna device, and more particularly, to an antenna device with flexible and foldable connecting member. Through the use of the flexible and foldable connecting member, adaptability of said antenna device to the installation in mobile communication devices can be increased.

### DESCRIPTION OF THE RELATED ART

Cell phones, or any other types of mobile communication devices, have become daily-life equipment that everyone would carry along. Formerly, a mobile communication device was generally limited to certain uses such as making phone calls, using short message services (SMS) or wireless internet connections, etc. Because cell phones are portable and nearly every person owns one, these advantages have inspired industries to integrate some particular functions into cell phones, such as the application of contactless smart cards that is gaining popularity. A so-called contactless smart card is an electronic card enabling the functions of a chip disposed therein by way of short-ranged induction. Contactless smart cards are widely used in our daily life; examples include the contactless credit card such as PayPass^{™} and VISA WAVE, the EasyCard for mass transit system, the access card or membership card with identification function, etc. The aforementioned smart cards may provide users with many convenient services in their daily life, and thus developers in the industry are eager to integrate the functions of various smart cards into a cell phone that nearly everyone would carry along, so that a cell phone, which has ordinarily been used to receive and make phone calls only, can also have the functionality of a credit card or an electronic wallet, or can be used for taking mass transportation or identification.

Nowadays, devices or electronic cards equipped with the contactless smart card functionality usually adopt the RFID (radio frequency identification) or the advanced NFC (near field communication) technology. Chips supporting these technologies are mounted into the contactless communication devices or electronic cards to perform their functions. In one conventional design, the contactless communication chip with the abovementioned functionality is integrated into the SIM card (Subscriber Identity Module card) installed in the cell phone and performs the induction step via the antenna element disposed inherently in the cell phone. Undoubtedly, such design can integrate various known functions of smart cards into one single cell phone device; however, this design is subject to many restrictions. First, because the chip with contactless communication module is integrated into the original SIM card, the mobile phone user has to purchase or obtain another new, customized SIM card in order to add or expand the cell phone functionalities. Second, even if a new SIM card with those functions is available, not all the cell phones in the market can support the functions of the contactless communication module embedded in those customized SIM cards.

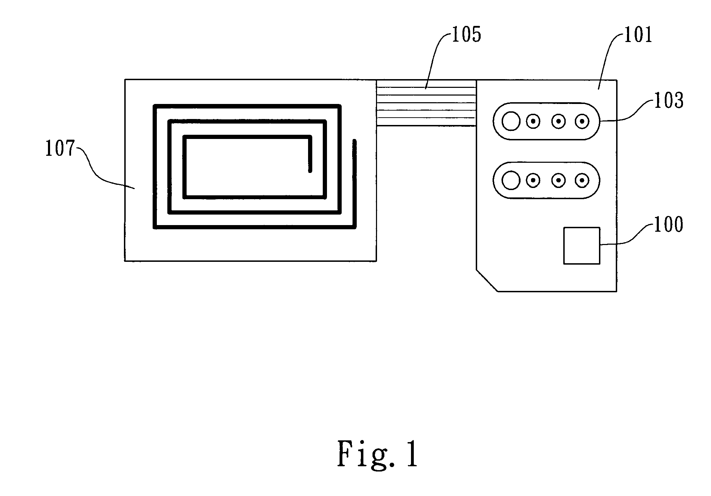

To address the above issue, a SIM card sticker provided with an antenna element has been developed. As shown in FIG. 1, in the practice of this design, a chip 100 including a contactless communication module is configured to be disposed on a SIM card sticker 101. The SIM card sticker 101 is provided with contacts 103 to be connected with the contacts of a SIM card. The SIM card sticker 103 is later attached to the SIM card and then they are installed together into a SIM card receiving portion in a cell phone. The SIM card sticker 103 is electrically coupled to the cell phone via the contacts 103 of the SIM card sticker. Also, the SIM card sticker 101 is electrically coupled to an antenna 107 via a connecting member 105 in order to achieve signal transmissions by electromagnetic induction of the antenna 107. In most cell phone designs, the receiving or input/out portion for a SIM card is often configured to be covered or blocked by a cell phone battery. Thus, it is generally designed that, after installation, the SIM card, SIM card sticker and the antenna are covered by the cell phone battery. In the condition that the cell phone battery is not large enough to cover the SIM card sticker and the antenna 107, (i.e. the area of the battery and the battery slot is smaller than that of the SIM card sticker and the antenna element), the antenna 107 may still be disposed within the cell phone by folding or bending the connecting member 105 along the surface of the cell phone battery to make the antenna 107 attach onto the other side of the cell phone battery.

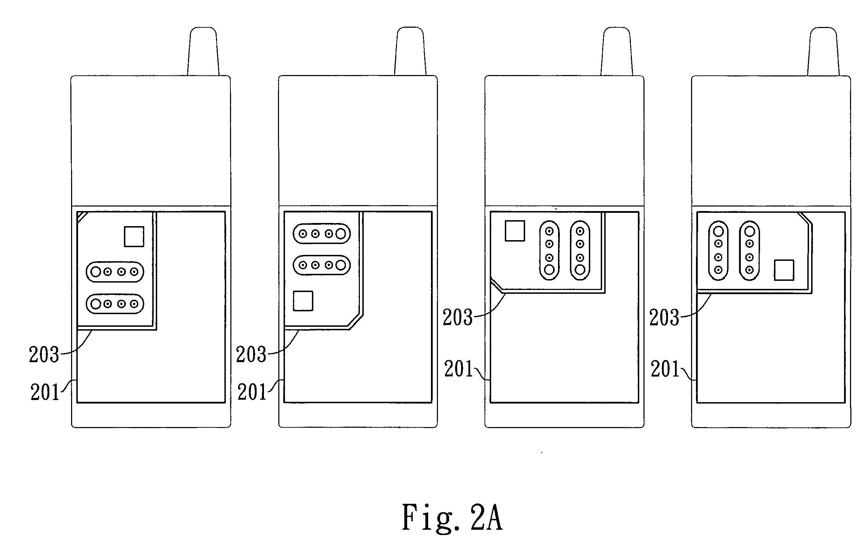

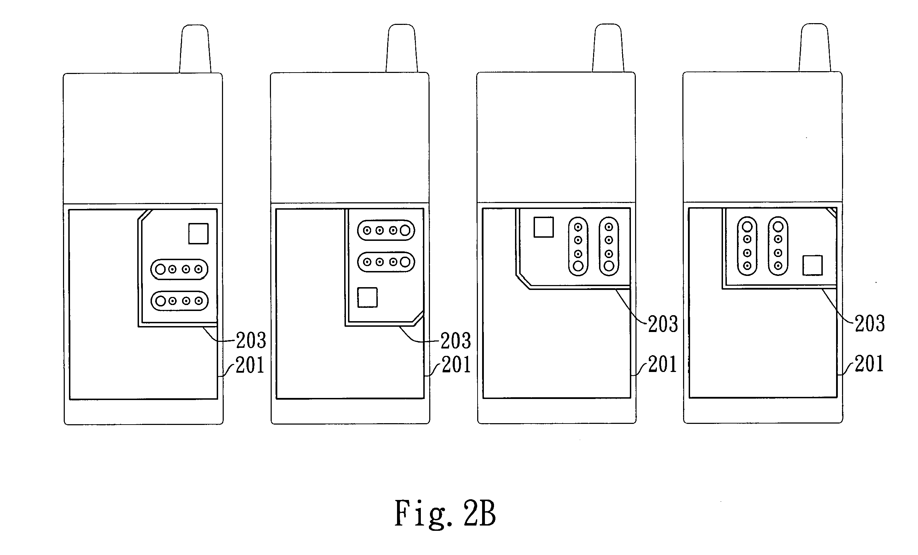

Undoubtedly, the use of the aforementioned SIM card sticker and antenna device may substitute the conventional process of integrating the contactless communication module into the SIM card to expand the functionality of cell phones. However, in practice, as shown in FIGS. 2A and 2B, a SIM card base 203 may have various predetermined positions in a cell phone slot 201, as well as different installation methods, such as the slot-embedded type, socket-inserted type or using an additional SIM card connector. Thus, it is not possible to accommodate the aforementioned SIM card sticker and antenna devices into all kinds of cell phones and SIM card configurations. Therefore, it is still necessary to develop an improved design with better adaptability so that a SIM card sticker and antenna device can be applied to all kinds of cell phone designs.

### SUMMARY OF THE INVENTION

To improve the abovementioned design of the prior art, the present invention provides an antenna device comprising: a contact substrate with a plurality of electrical contacts, an antenna substrate, and a connecting member connected between said contact substrate and said antenna substrate. Said connecting member is flexible and foldable and is provided with at least one corner portion; said corner portion defines at least one horizontal section and at least one vertical section to render said antenna device better adaptability.

In one aspect of the present invention, both sides of the contact substrate of the antenna device are provided with corresponding contacts. The contacts on one side of the contact substrate are attached to a SIM card to establish an electrical connection; the contacts on the other side of the contact substrate are electrically connected to the SIM card contacts on the cell phone.

In another aspect of the present invention, the connecting member of the antenna device is provided with at least one corner portion defining a horizontal section and a vertical section which are perpendicular to each other. The design of the corner portion provides the antenna device of the present invention with more folding patterns.

In yet another aspect of the present invention, the connecting member of the antenna device may be folded for multiple times along the long axis and short axis directions to locate the contact substrate and the antenna substrate of the antenna device at arbitrary positions on a plane.

In still another aspect of the present invention, the connecting member of the antenna device is folded along the surface of a cell phone battery. The contact substrate and the antenna substrate of the antenna device are respectively attached to the front side and the back side of said cell phone battery after folding.

One object of the present invention is to provide an antenna device comprising a connecting member which has a horizontal section and a vertical section, so that said antenna device can be installed in and used for communication devices utilizing a SIM card configuration.

Many other aspects may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

### BRIEF DESCRIPTION OF THE DRAWINGS

The system and method may be better understood with reference to the following drawings and description. Non-limiting and non-exhaustive embodiments are described with reference to the following drawings.
Fig. 1 is a schematic view showing a SIM card sticker and an antenna device in prior art;
Figs. 2A and 2B are schematic views of various SIM card base configurations in most cell phones available on the market;
Fig. 3 is a schematic view of an antenna device in accordance with an embodiment of the present invention;
Fig. 4 is a schematic view of an antenna device in accordance with another embodiment of the present invention;
Fig. 5 is a schematic view of an antenna device in accordance with still another embodiment of the present invention;
Fig. 6A is a schematic view showing the relative positions of the contact substrate and the antenna substrate before the connecting member of the antenna device is folded in accordance with an embodiment of the present invention;
Fig. 6B is a schematic view showing the change of relative positions of the contact substrate and the antenna substrate after the connecting member of the antenna device is folded in accordance with an embodiment of the present invention;
Fig. 7A is a schematic view showing the relative positions of the contact substrate and the antenna substrate before the connecting member of the antenna device is folded in accordance with another embodiment of the present invention;
Fig. 7B is a schematic view illustrating the change of relative positions of the contact substrate and the antenna substrate after both the horizontal section and the vertical section of the connecting member of the antenna device are folded in accordance with another embodiment of the present invention;
Fig. 8 is a schematic view illustrating the flexible area of the connection member in accordance with an embodiment of the present invention;
Fig. 9A is a front view of an antenna device and a cell phone battery after folding in accordance with an embodiment of the present invention;
Fig. 9B is a side view of an antenna device and a cell phone battery after folding in accordance with an embodiment of the present invention; and
Fig. 9C is a rear view of an antenna device and a cell phone battery after folding in accordance with an embodiment of the present invention.

### DETAILED DESCRIPTION OF THE PREFERRED EMBODIMENTS

The following detailed description in connection with the accompanying drawings is contemplated to illustrate various perspectives and embodiments of the antenna device in accordance with the present invention. It is not intended in this disclosure to specify or encompass all available and exhaustive methods and features in the aspect of the present invention. The embodiment disclosed herein may be provided with numerous specific details which are set forth in order to provide a thorough understanding of the present invention. It will be apparent, however, to those of ordinary skill in the art that the present invention may be practiced without these specific details. In other instances, well-known structures and devices are shown in block diagram form in order to avoid unnecessarily obscuring the present invention.

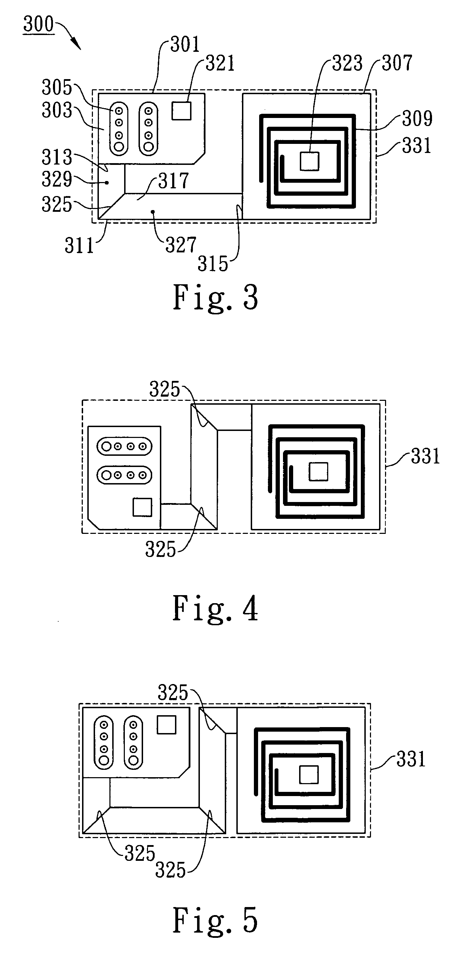

Fig. 3 is a schematic view of an antenna device in accordance with an embodiment of the present invention. As shown in Fig. 3, an antenna device 300 includes a contact substrate 301. One side of the contact substrate 301 is a first contact interface with a plurality of electrical contacts 305 arranged thereon to electrically couple to corresponding contacts, such as the contacts on a SIM card or the contacts on a cell phone to for SIM card connection. For example, in one embodiment, the contact substrate 301 is attached to a SIM card via the first contact interface 303. For this purpose, a layer of adhesive is applied to the surface of the first contact interface 303 so that it can attach to the active surface of the SIM card. Optionally, a peelable layer (not shown) may be further provided on the contact substrate 301 which can be peeled off from the first contact interface 303 to facilitate the process of adhesion between the contact substrate 301 and the SIM card. The contact substrate 301 is electrically connected to the SIM card by connecting the multiple electrical contacts on the contact substrate 301 to the corresponding contacts on the SIM card. For this purpose, the contact substrate 301 in the antenna device 300 is dimensioned to have an area substantially the same to or no larger than the area of the SIM card. Furthermore, after adhesion, the contact substrate 301 and the SIM card may be mounted together into a SIM card receiving portion in the cell phone, such as a base, slot, socket or connector for receiving a SIM card.

The antenna device 300 of the present invention further comprises an antenna substrate 307 with an antenna 309 (as the coil shown in Fig. 3) disposed thereon. The antenna device 300 of the present invention may be communicatively coupled to an external device via the antenna 309 (e.g. by wireless RF induction) to transmit or receive signals. In addition, a connecting member 311 is provided which connects between the contact substrate 301 and the antenna substrate 307. The connecting member 311 includes a first end 313, a second end 315, and an intermediate section 317 between the first end 313 and the second end 315. The first end 313 is integrally connected to the contact substrate 301, and the second end 315 is integrally connected to the antenna substrate 307. With the connection of the connecting member 311, the antenna substrate 307 can transmit data received by the antenna 309 to the contact substrate 307, and data generated by the contact substrate 301 can also be transmitted to the antenna substrate 307 and further to the external device via the antenna 309. Furthermore, the contact substrate 301 and/or the antenna substrate 309 may be provided with an application-specific integrated circuit (ASIC, such as a chip or functional module), as the components 321 and 323 shown in Fig. 3, which are electrically connected to the first contact interface and the antenna respectively. The incorporation of such IC and antenna enables the antenna device to perform various functions, such as to top up the electronic wallet, or to be used in a wireless RFID system.

In another embodiment of the present invention, the connecting member may provide only the function of connecting the contact substrate and the antenna substrate without communicating signals therebetween. It should be noted that in the present invention, the first end 313 the of connecting member 311 may be connected to any outer edge portion of the contact substrate 301 in addition to the corner portion, so that the antenna device can be accommodated to various SIM card configurations in a cell phone. For example, four different mounting positions of the SIM card are shown in Fig. 2. Similarly, the second end 315 of the connecting member 311 may be connected to any outer edge portion of the antenna substrate 307 in addition to the portion shown in Fig. 3. In this embodiment, the intermediate section 317 of the connecting member 311 has a corner portion 325. The corner portion 325 divides the intermediate section 317 into a horizontal section 327 and a vertical section 329 which are perpendicular to each other. However, in other embodiments, the connecting member may have a plurality of corner portions 325 defining at least one horizontal section and at least one vertical section, as shown in Figs. 4 and 5. Preferably, the length and number of the horizontal sections and the vertical sections, the size of the antenna substrate, and the configuration of the corner portion 325 are configured in a manner that the entire antenna device, including the contact substrate 301, the antenna substrate 307 and the connecting member 311, are encompassed inside a rectangular area, as the dotted box 331 shown in the drawings. This design may facilitate the manufacture of the antenna device and improve the adaptability of the entire device.

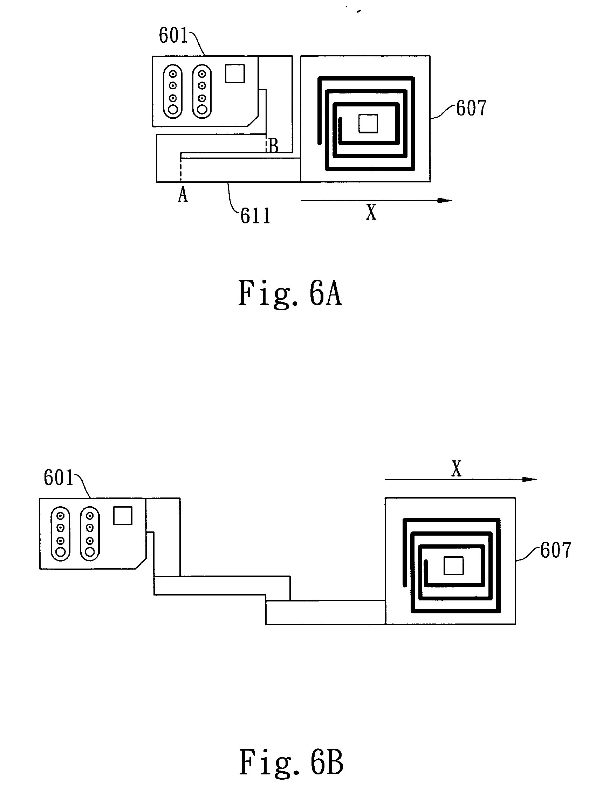

Figs. 6A and 6B are schematic views illustrating the change of relative positions of the contact substrate 601 and the antenna substrate 607 before and after folding the connecting member 611. The antenna device of the present invention is configured such that the relative positions of the contact substrate and the antenna substrate and the lengths of the connecting member in every direction may be changed and adjusted by folding the connecting member. When the connecting member is folded, there may or may not be a folding line formed thereon. That is, the connecting member may be folded over completely or only bent slightly. In the present invention, the connecting member of the antenna device may be made of flexible or foldable materials, such as flexible flat cables (FFC) made of polyvinyl chloride (PVC). The relative positions of the contact substrate 601 and the antenna substrate 607 may be changed by folding the intermediate section of the connecting member without damaging the electrical connection therebetween. This design may facilitate the installation of the antenna device and also improve its adaptability to various situations. For example, in the embodiment shown in Fig. 6A, the connecting member 611 may be folded along the dotted line A and dotted line B on the horizontal section. The relative positions of the contact substrate 601 and the antenna substrate 607 after folding the connecting member 611 are shown in Fig. 6B. It can be seen that the length of the folded connecting member 611 between the contact substrate 601 and the antenna substrate 607 in the direction of the long axis X is extended. The extended length between the contact substrate 601 and the antenna substrate 607 may enable the antenna device to be placed within a cell phone in a folded or bent manner. For example, the connecting member 611 may be folded in a way that the contact substrate 601 and antenna substrate 607 are disposed respectively on the opposite sides of a cell phone battery. Detailed descriptions will be given below.

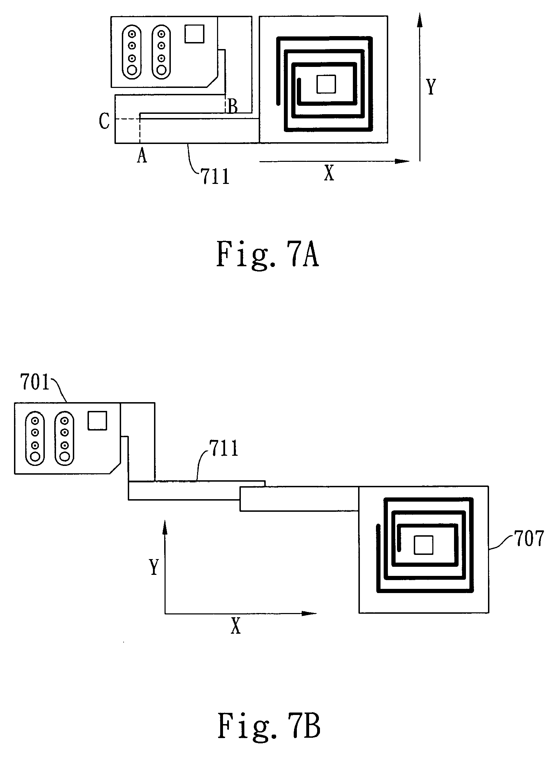

The aforementioned embodiment describes a folding pattern in the direction of the long axis X. In an alternative embodiment, as shown in Fig. 7A, the connecting member 711 may be folded in the direction of the long axis X and the direction perpendicular to the long axis X (i.e. the short axis Y) both. In Fig. 7A, the connecting member of the antenna device shown in Fig. 6B is folded once more along the horizontal dotted line C. The relative positions of the contact substrate and the antenna substrate after folding the connecting member 711 are shown in Fig. 7B. It can be seen that the relative distance between the contact substrate 701 and the antenna substrate 707 in the direction of the short axis Y is changed too. The relative distance and positions with respect to the contact substrate and the antenna substrate may be determined by changing the length of the folded connecting member in both directions of the long axis X and the short axis Y. This design can improve the adaptability of the antenna device to different configurations.

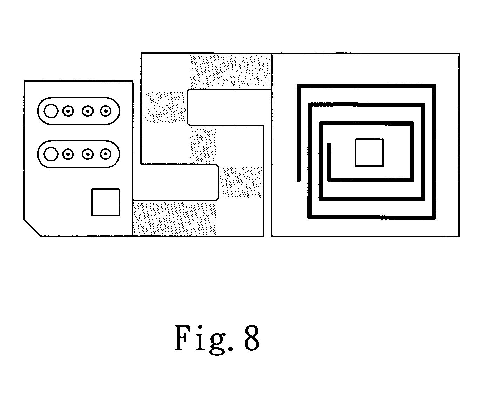

The folding patterns shown in Figs. 6A, 6B and Figs. 7A, 7B are merely exemplary. In an alternative embodiment, the connecting member may be further folded and extended. As shown in Fig. 8, the connecting member of the antenna device has four corner portions defining a total of five shaded areas that are foldable. By folding along the folding lines in the shaded areas, the contact substrate and the antenna substrate may be located freely at any relative positions with predetermined horizontal and vertical distances. In brief, folding the horizontal sections of the connecting member determines the distance between the contact substrate and the antenna substrate in the direction of the long axis X, while folding the vertical sections of the connecting member determines the distance between the contact substrate and the antenna substrate in the direction of the short axis Y.

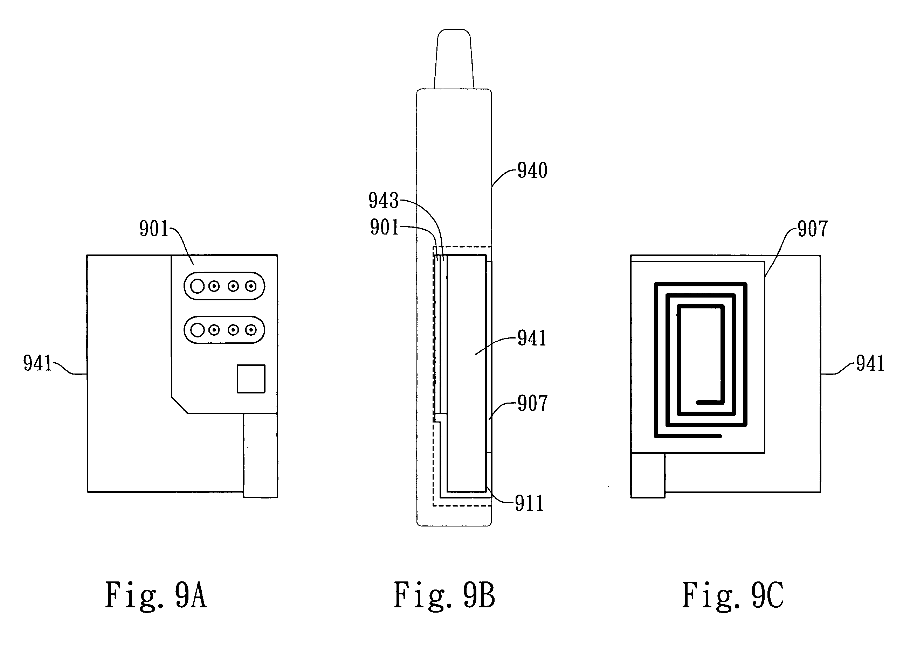

The fundamental components and various folding patterns of the antenna device of the present invention are described in the foregoing embodiments. An exemplary embodiment will be described hererinafter to illustrate the condition where the antenna device is to be installed in a cell phone device. In this embodiment, after folding the connecting member to obtain the desired horizontal and vertical lengths of the connecting member between the contact substrate and the antenna substrate, their relative positions in the antenna device are determined; then, the contact substrate may be attached to a SIM card such that electrical connection is established therebetween by coupling the plurality of electrical contacts. The antenna device and the SIM card are then mounted together into a SIM card receiving portion in a cell phone. Figs. 9A to 9C are schematic views illustrating the antenna device installed a cell phone in accordance with one embodiment of the present invention. A contact substrate 901 and an antenna substrate 907 of the antenna device are attached respectively to the opposite surfaces of a cell phone battery 941 by folding the connecting member, as shown in Figs. 9A and 9C. It is shown in Fig. 9B that a SIM card 943 is sandwiched between the cell phone battery 941 and the contact substrate 901 when the antenna device is installed within the cell phone 940. The first contact interface of the contact substrate 901 is electrically connected to the SIM card, while the surface opposite to the first contact interface is electrical connected to the contacts on the cell phone 901. The antenna substrate 907 of the antenna device is attached to the other side of the cell phone battery (i.e. the side facing the battery slot opening) by bending or folding the connecting member 911 along the surface of the cell phone battery 941. In this case, the contact substrate is used to interface the SIM card and the cell phone. In the present invention, the contact substrate used as an interface may function independently in the cell phone. For example, the contact substrate may be configured to enable only electrical connection between the SIM card and the cell phone circuit and not involved in the operation of the cell phone and the chips disposed thereon; that is, the contact substrate is not involved in the operation of the smart card functionality (ex. electronic wallet or wireless RFID). In an alternative embodiment, the chip disposed on the antenna device may incorporate with the circuit of the cell phone to expand the functionality of the cell phone or achieve other desirous uses.

In the original design of the cell phone in this embodiment, the SIM card is configured to be mounted in a predetermined receiving position or structure, such as a slot or socket formed compactly within the housing of the cell phone. There is no remaining space for the antenna part to be installed in. To solve this problem, the antenna part of the present invention is folded over onto the other side of battery and attached thereto, enabling the entire antenna device to be received within the cell phone. The adjustable length and relative positions of the two substrates may also enable the structure of the present invention to be accommodated in all kinds of cell phone designs with different SIM card configurations, such as the configuration with different sizes of the mounting plane for SIM cards, different mounting positions and orientations for SIM cards, and different mounting methods for SIM cards (e.g. slot-embedded type, socket-inserted type, and SIM card connector, etc).

When the contact substrate 901of the antenna device and the SIM card 943 are placed in the card receiving portion of the cell phone, the antenna substrate 907 of the antenna device will be exposed outside. The connecting member 911 is then folded along the surface of the battery 941 such that the antenna substrate 907 will be attached to the surface of the battery 941 opposite to the contact substrate 901. In this way, the antenna device can be accommodated completely inside the cell phone without affecting the appearance and functions of the cell phone. In a specific embodiment, the antenna substrate is dimensioned to be in a square shape in order to obtain most favorable lengths in vertical and horizontal directions in any folding patterns.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. An antenna device, comprising:
a contact substrate, one side of said contact substrate being provided with a first contact interface having a plurality of electrical contacts;
an antenna substrate with an antenna disposed thereon; and
a connecting member, said connecting member being provided with a first end, a second end and an intermediate section between said first end and said second end, said first end being integrally connected to said contact substrate, and said second end being integrally connected to said antenna substrate;
wherein said intermediate section is provided with at least one corner portion.

2. The antenna device according to claim 1, wherein said intermediate section is divided into at least one horizontal section and at least one vertical section which are substantially perpendicular to each other.

3. The antenna device according to claim 2, wherein a long axis direction is defined on a plane as the direction moving from said contact substrate toward said antenna substrate, said horizontal section is substantially parallel to said long axis direction, and said vertical section is substantially perpendicular to said long axis direction.

4. The antenna device according to claim 3, wherein the distance between said contact substrate and said antenna substrate in said long axis direction is determined by a folding state of said horizontal section.

5. The antenna device according to claim 3, wherein the distance between said contact substrate and said antenna substrate in a direction perpendicular to said long axis direction is determined by a folding state of said vertical section.

6. The antenna device according to claim 2, wherein the relative distance between said contact substrate and said antenna substrate is defined by a folding state of said horizontal section.

7. The antenna device according to claim 2, wherein the relative distance between said contact substrate and said antenna substrate is defined by a folding state of said vertical section.

8. The antenna device according to claims 4, wherein a folding line is formed on the connecting member.

9. The antenna device according to claims 5, wherein a folding line is formed on the connecting member.

10. The antenna device according to claim 1, wherein one side of said contact substrate is provided with an integrated circuit which is electrically connected to said first contact interface.

11. The antenna device according to claim 1, wherein one side of said antenna substrate is provided with an integrated circuit which is electrically connected to said first contact interface.

12. The antenna device according to claim 1, wherein said antenna is electrically connected to said first contact interface via said connecting member.

13. The antenna device according to claim 1, wherein said antenna substrate is in a square shape.

14. The antenna device according to claim 1, wherein said contact substrate can be attached to a SIM card and mounted together with said SIM card into a receiving portion of a cell phone, and said contact substrate is sandwiched between said SIM card and contacts in said receiving portion.

15. An antenna device, comprising:
a contact substrate, wherein one side of said contact substrate can be attached to a SIM card and is provided with a first contact interface, and said first contact interface is provided with a plurality of contacts corresponding to a plurality of contacts of said SIM card;
an antenna substrate with an antenna disposed thereon; and
a connecting member between said contact substrate and said antenna substrate, wherein said connecting member is integrally connected to said contact substrate and said antenna substrate, and said connecting member is provided with at least one horizontal section and at least one vertical section which are substantially perpendicular to each other.
